# EUROPEAN PATENT APPLICATION

(11) **EP 0 761 514 A1**
(43) Date of publication of application: **12.03.1997**
(21) Application number: 95936805.1
(22) Date of filing: 25.10.1995
(51) Int. Cl.: B60R 25/00

(54) **METHOD OF CONTROLLING VEHICLES WITH PREVENTION OF UNAUTHORISED ACCESS BASED ON SPEECH ANALYSIS, AND A SYSTEM FOR APPLYING THE PROPOSED METHOD**

(30) Priority: 20.03.1995 RU 95103817
(71) Applicant: Taubkin, Vladimir Lvovich, Moscow, 117296 (RU); Galunov, Viktor Ivanovich, Petrodvoretc, St. Petersburg (RU)
(72) Inventor: Taubkin, Vladimir Lvovich, Moscow, 117296 (RU); Galunov, Viktor Ivanovich, Petrodvoretc, St. Petersburg (RU)
(74) Representative: Zwirner, Gottfried, Dipl.-Ing. Dipl.-W.-Ing.
(86) International application number: RU9500230
(87) International publication number: WO9629216

(57) **Abstract**

The present invention relates generally to control of motor vehicles with the use of security systems and, more specifically, to protection of various objects, for example, motor vehicles against an unauthorized access of unauthorized persons to security systems.

Subject matter of the invention. A system for controlling motor vehicles to provide protection against an unauthorized access based on automatic voice analysis comprising a text-independent parameter discrimination unit extracting spectral-and-time vocal parameters specific to the user's voice and manner of speech, and a text-dependent parameter discrimination unit for user verification and control purposes, which unit selects a set of parameters substantially sufficient for reliable recognition of a spoken word or sentence. The discrimination units have their inputs communicated to a microphone and connected to a user's identity verification subsystem and a service password and control command recognition subsystem. Such subsystems generate the signals for an adaptive control unit which is interfaced with a logical function memory, ignition key used to initialize the system, and vehicle subsystems.

According to a method accomplished with the aid of such system, said system after being trained by the user to recognize his (her) voice, even if the voice is changed, say, due to a decease, acts on the appropriate vehicle information subsystems in the event of attempts of an unauthorized access to the vehicle and provides for the accomplishment of other procedures, including the "Retraining," "Valet," and "Car-jacking" modes.

## Description

### BACKGROUND OF THE INVENTION

### 1. Field of Application

The present invention relates generally to control of various objects and, more specifically, to control of motor vehicles having security systems, for example, to preclude unauthorized access based on automatic user's voice analysis, and is applicable for designing vehicle security systems.

### 2. Description of Prior Art

Known in the art are a method and an apparatus for remote control of one or several functions of a motor vehicle utilizing a portable code signal transmitter and a receiver located in a motor vehicle (automobile), wherein the receiver compares the received code with the code stored in the receiving unit to determine the code value and activate security means (PCT, A1, 93/17895). To ensure more reliable protection, said technical solution makes use of two portable transmitters to send the code signals that affect the security mechanisms in a different manner.

The code signals of such transmitters, however, can be simulated, say, by a special scanner, to gain unauthorized access, whereby the reliability of such security system is degraded. In particular, external scanning makes it possible to generate similar access codes which give access to the protected object. Besides, the portable transmitter can be stolen and used for vehicle theft.

Another similar vehicle security system uses a multichannel remote transmitter and a receiving unit connected through a controller to drive mechanisms of a steering wheel and a seat, which when set to the unauthorized position makes it impossible to start this vehicle (US, A2, 4997053).

Also known in the art is a vehicle security apparatus having its input element installed on the inner side of the vehicle window, motor hood or boot lid (PCT, A2, 82/02861). The input element is provided with radiation-sensitive switches which are actuated by a code element from the outside, with the input element responding to variations in the radiation or field set up by the external source. The door is connected to the audio and silent visual signaling system.

This apparatus operates in response to any attempt of unauthorized penetration into a closed vehicle, but fails to ensure a sufficiently high reliability of protection because the code element signals can be simulated.

Known in the art is an electronic interlocking system made as a mechanical lock and a key with a built-in transmitter which interacts with a receiver installed on the lock (PCT, A2, 07/00234). The receiver communicates with an electronic unit which registers the code signal.

In this case, however, the key transmitter signals can easily be simulated by an external source, which degrades the reliability of protection. Besides, the key can be stolen and used for vehicle theft.

Known in the art is a vehicle security system the protection elements of which respond to an RF signal sent by a portable unit made, for example, in the form of an ignition key (PCT, A2, 93/02897). To enhance the protection reliability, the portable unit, when installed, is powered and a code RF signal is generated along the second trajectory inside the vehicle, the signal being applied to the projection elements to disconnect appropriate protection actuating mechanisms.

However, these code signals can be likewise simulated from an external source, whereby the unauthorized control of the vehicle security system can be gained.

In order to enhance the security reliability disclosure was made of a vehicle control and security system capable of identifying its owner, the system using a radiator with a keypad and a plurality of radiators with one button to transmit digital code signals received by a receiver in a the vehicle the systems of which verify the signals which identify the owner (FR, A1, 2615152). When the car owner is personally identified, a code is generated the first part of which is permanently stored inside the vehicle and the second part of which is registered on a card held by the owner, the two parts being stored in the memory (FR, A1, 2619065).

The code radiators and generators, however, have the aforesaid limitations, while the personal identification codes proper can easily be forged to gain unauthorized access.

Similar systems were suggested by Bayrishe Motoren Werke AG, Munich. The systems employ remote transmitters (for example, in the form of a key) and car-mounted receivers or an interrogator-responder, which control the security mechanisms or confirm the authorized access to these mechanisms on the part of the vehicle owner (DE, A1, 3536377, DE, A1, 3536378, and DE, A2, 3900494). The disadvantage of these systems consists in that the codes generated by the remote transmitters can be simulated, this degrading the security reliability in case of unauthorized access. Besides, a thief can steal the remote transmitter to gain an unauthorized access to the protected object.

Also known in the art are identification cards with a programmable unit inserted into a control device and allowing various checks and settings to be performed, security mechanisms of the car control system to be disarmed, etc. (PCT, A2, 84/03785). However, the identification cards as mechanical data carriers are not sufficiently protected against forging, may be lost and, as a result, used by unauthorized persons.

Known in the art is a system affording safety of objects and, in particular, of automobiles, which comprises a remote transmitter unit and a receiver unit installed on a motor vehicle and connected to actuating means and an alarm unit through a special-purpose controller (PCT, A2, 93/22164 or PCT, A2, 92/17863). The transmitter unit generator produces one or more pseudo-random code sequences or this sequence according to a preset program, whereas on the receiver side the stored identification code and the pseudo-random code are compared with the received identification code and the stored pseudo-random code to generate a command controlling the memory, the receiver unit and the actuating means. Inasmuch as the transmitter and receiver codes permanently vary, an unauthorized access to the actuating means of the motor vehicle thus protected is rather difficult.

Nevertheless, the code messages generated by the transmitter units of such security systems are not specific to the user (for example, the motor vehicle owner) and in the long run may be simulated or scanned with the aid of an external source, which degrades the security reliability. Besides, thieves may steal and use the transmitter units because the security system features no means for authorized user's voice verification.

The disadvantages described above may partially be obviated if an authorized user is identified or verified with reference to his unique personal or physiological parameters, for example, his voice and speech, which, firstly, are specific to the user and, secondly, are inseparable from him.

"Voice keys" have been already used in some fields to provide an authorized access of designated persons to data banks or special-purpose mechanisms in response to specific features of their speech (RU, A, 1453442, RU, A1, 1675936), as well as to telecommunications channels based on a voice recognition (EPO, A2, 0533396 and US, A1, 4837830).

The prior art user's voice identification devices generate some characteristic parameters, based on a standard sentence pronounced by the user, and compare them with mean values stored in the internal memory (EPO, A2, 0154020). As a result of such comparison, a value of probability that the sentence has been pronounced by the appropriate user is generated and compared with a threshold value. If the probability value exceeds the threshold value, the device considers the user to be verified.

Also known in the art are systems storing authorized user's speech templates in special cards (US, A1, 4961229 or US, A1, 4827518).

Besides, many known solutions suggest the use of voice-actuated control for various vehicle systems without personal identification of the user (e.g., US, A1, 4797924 or US, A2, 5214707).

These systems, however, are not capable of remote speech coding and subsequent verification of the speaker to prevent an unauthorized access to the protected object, i.e., they do not use the external communications channel to transmit a coded user's voice information solely for protection purposes in order to completely prevent interference of unauthorized persons.

And, finally, known in the art is a voice-actuated vehicle security system and an associated method for protection against unauthorized access (for example, US Patent 4856072, Int. Cl. H018 1/00, published in 1989). This technical solution used as a prototype turns a vehicle security system on and off based on comparison of passwords pronounced by the user with prerecorded templates of similar passwords of the authorized users. Such system incorporates an external microphone sending vocal signals to a processing unit, while a microcomputer controls a speech recognition and synthesis unit, generates control signals for a sensor switching unit (alarm siren, vehicle motion, operator's keypad for setting a code, ignition, motor hood closure, door interlocks and turning on lights). The microcomputer also controls a sensor control signal input/output unit, vocal control commands when comparing them with the templates of one or two users and produces digital signals which are converted by an analog-to-digital converter for the internal and external speakers (a unit generating vocal messages for the user). The computer analyses the vocal messages coming from the operator (user) and, if they comply with the recognition templates, generates selected control signals for the recognition unit which ensures operation of the appropriate vehicle systems (starter, ignition, etc.). Besides, the computer provides for personnel (driver) training by turning on/off an alarm system and actuating means of a motor vehicle. Provision is made for a speaker identification system and an vehicle components control unit.

A general limitation of the verification system using voice templates of the authorized user consists in that it creates insurmountable difficulties for the user to get into the car if his psycophysiological conditions have changed thereby affecting the voice parameters. Said verification systems are not adaptable to individual voice variances.

The latter is especially important when the verification system is used with a vehicle because the authorized user in this case is the vehicle owner and should not experience any difficulty in handling the system. However, the system according to the aforesaid technical solution (the prototype) is completely unadaptable to the user who can at his own discretion change a degree of the object protection, a decision point during the command verification and recognition depending on speech abilities and capabilities of the user. Also it fails to register a criminal's voice in case of an unauthorized access, which may be essential for future search and prosecution of this criminal.

In addition, the prior art system fails to provide efficient protection against car jacking and lacks an additional electromechanical control system (Train Switch).

### SUMMARY OF THE INVENTION

### 1. Objects of the Invention

Accordingly, it is a primary object of the present invention to provide a method for motor vehicle control providing protection against unauthorized access with the aid of a voice, and a system therefor to preclude unauthorized access to the object and to ensure easy and convenient operation of the authorized user.

Another object of the invention is to provide technical security means based on the user's voice analysis.

Still another object of the invention is to provide a method and a voice-actuated system which prevent an access to and control of a motor vehicle on the part of an unauthorized person and, at the same time, respond to the authorized user's voice even if it has changed due to disorder or other physiological changes, and thus adaptable to variations in the user's voice.

One more object of the invention is to provide a method and a system for voice-actuated protection of motor vehicles against unauthorized access, which counteract against car jacking.

A further object of the invention is to provide a method and a system which are capable of selecting a desired degree of security for motor vehicles.

A still further object of the invention is to provide a method and a system which register voices of unauthorized persons attempting to penetrate into a motor vehicle.

In order that the subject-matter and advantages of the present invention may readily be understood, it will now be described in greater detail by way of example with reference to preferred embodiments thereof taken in conjunction with the accompanying drawings, which embodiments are merely illustrative and not restrictive.

### 2. Summary of the Invention

In accordance with these and other objects a multifunctional system for protection of a motor vehicle against an unauthorized access and control comprises a microphone responding to the user's voice, a unit generating vocal messages for the user, a user's identity verification unit, a vocal message recognition unit, a logical function memory, an adaptive control unit and an initialization unit to select the control unit operating mode. The verification unit operates on both text-dependent and text-independent parameters and generates a first set of control signals. Similarly, the recognition unit receives information from the microphone for recognition of service passwords and control commands and generates a second set of control signals. The recognition unit depends for its operation on text-dependent parameters. The logical function memory stores programs controlling the system mode characteristics and selection of text-independent and text-dependent parameters. The adaptive control unit discriminates the control signals from the first set of such signals to generate appropriate commands for an alarm and interlock unit suitably installed in a motor vehicle and also discriminates the control signals from the second set of such signals to select the corresponding mode, change parameters and generate the commands for the vocal message generator unit and the motor vehicle actuating means. Such selection and changes are governed by the programs stored in the logical function memory.

In the preferred embodiment of the invention the verification unit includes a text-independent parameter discrimination unit which extracts speech parameters obviously unique to the user's voice, a text-dependent parameter discrimination unit extracting speech parameters used for recognition of a user's statement, and a first user verification subsystem.

The vocal message recognition unit according to the preferred embodiment of the invention includes a text-dependent parameter discrimination unit, which extracts speech parameters used for recognition of a user's statement, and a second subsystem for recognition of service passwords and control commands pronounced by the user.

The system may also include a speech recorder for recording conversations in a motor vehicle in case of an unauthorized access thereto.

The method for protection of a motor vehicle against an unauthorized access and control according to the present invention employs a multifunctional system suitably installed in the motor vehicle. This method comprises the steps of system initialization; generation of a vocal message for the user; request of start of a system training procedure and transmission of a message to the user; introduction of a vocal password through the microphone by the user; analysis of the vocal password in the text-dependent and text-independent modes by the user verification unit and the system vocal message recognition unit controlled by the adaptive control unit; storage of the analyzed password in the form of a password template in the logical function memory; generation of a vocal message for the user, a request for continuation of the training procedure and transmission of a message to the user; introduction of a vocal service password by the user through the microphone; analysis of the service password in the text-dependent mode by the recognition unit controlled by the control unit; storage of the analyzed vocal service password as a service password template in the logical function memory; generation of a vocal message requesting continuation of the training procedure and transmission of this message to the user; introduction of a vocal control command by the user through the microphone; analysis of the control command in the text-dependent mode by the recognition unit controlled by the control unit; storage of the analyzed control command as a control command template in the logical function memory; generation of a vocal confirmation and its transmission to the user; and switching of the system to the operating state.

To ensure a higher degree of security, a password should sequentially be introduced into the system a preset number of times.

There is a preset number of service passwords and control commands which should sequentially be introduced into the system, each of them being individually analyzed and stored therein.

Arming the system activates, according to the herein proposed vehicle protection method, the steps of system initialization; generation of a vocal message requesting a vocal password to be pronounced, which message is transmitted to the user; pronouncing the password by the user through the microphone; generation of a control signal for the control unit activating the verification procedure; user's identity verification based on the text-dependent and text-independent vocal password analysis with reference to the user's voice template stored in the logical function memory; and activation of the alarm and interlock unit if the analysis reveals that the user's voice template does not comply with the pronounced password.

For a higher reliability, the password should be pronounced a preset number of times.

If the verification procedure yields a positive result, vocal confirmation is formed and transmitted to the verified user.

Then the user pronounces a service password into the microphone and the control unit generates a control signal initiating the pronounced service password verification. This procedure is based on the text-dependent speech analysis with reference to the service password voice template stored in the logical function memory. Then a control signal is produced to select the system mode corresponding to the recognized service password and a vocal message is generated for the user in the form of the recognized service password.

Then, the user pronounces a control command and the control unit generates a control signal to recognize this command. This procedure accomplished by the vocal message recognition unit controlled by the adaptive control unit is likewise based on the text-dependent voice analysis of the command with reference to the control command template stored in the logical function memory. Then, a control signal is produced and sent to the actuating means corresponding to the recognized control command and a vocal message is generated for the user in the form of the recognized command.

When the car-jacking counteraction function according to the present invention is carried out, the herein proposed method includes the following steps: recognition of the "Car-jacking" service password based on the text-dependent voice analysis of the pronounced password with reference to the corresponding template stored in the logical function memory; generation of a control signal and its transmission to the control unit to select the "Car-jacking" mode, and activation of the alarm unit and actuating means.

According to another embodiment of the car-jacking counteraction function the method includes the steps of system initialization; generation of a vocal message for the user to request a vocal password to be pronounced; pronouncing the service password corresponding to the "Car-jacking" mode by the user; recognition of the "Car-jacking" service word by the vocal message recognition unit controlled by the control unit based on the text-dependent voice analysis of the pronounced word with reference to the template thereof stored in the logical function memory; generation of a control signal for the adaptive control unit during selection of the "Car-jacking" mode and activation of the alarm unit and actuating means.

Such activation is sequentially carried out during a preset time interval from the instant the "Car-jacking" service password is introduced.

When the system operates in the specific "Training" mode, the method according to the invention includes the steps of pronouncing a first designated service password, associated with the "Training" mode, by the verified user; generating a requesting vocal message and transmitting said message to the user, as well as pronouncing a second designated service password, representing the selected training mode, by the user; pronouncing a vocal password by the second user into the microphone, said password being analyzed in the text-dependent and text-independent modes by the user's identity verification unit and the vocal message recognition unit controlled by the control unit; storing the analyzed vocal password of the second user in the logical function memory as the second user's password template; forming a vocal message for the second user requesting continuation of the training and transmittion and message to the second user; analyzing the second user's vocal password in the text-dependent mode by the vocal message recognition unit controlled by the control unit; storing the analyzed second user's service password as the second user's service password template in the logical function memory; forming a vocal message requesting continuation of the training procedure and transmitting said message to the second user; repeating all operations described above in respect of a service password for a vocal control command and switching the system to the operating condition.

When the system operates in the "Valet" mode, the herein proposed method includes the following steps: pronouncing a third designated service password, associated with this mode, by the verified user; recognizing the pronounced service password by the vocal message recognition unit controlled by the control unit based on text-dependent analysis with the aid of the "Valet" service password template stored in the logical function memory; generating a control signal for the adaptive control unit to select the "Valet" mode; switching the system to the standby mode followed by interlocking of the alarm and interlock systems; pronouncing a fourth designated service password by the verified user to cancel the "Valet" mode; recognizing this service password by the vocal message recognition unit based on the text-dependent voice analysis controlled by the control unit and with the aid of the "Valet" service password template stored in the logical function unit; generating a control signal for the control unit to cancel the "Valet" mode and switching the system to the operating condition.

According to still another embodiment of the present invention the system is initialized by the user with the aid of the initialization unit (for example, the ignition key); a vocal message is generated and transmitted to the user requesting a password to be pronounced; the vocal password is verified as described above; a service password is pronounced, which password corresponds to the voice change mode, said password being recognized based on the text-dependent voice analysis with the aid of the service password template; a control signal for the adaptive control unit is generated to select the "Voice change" mode; the user pronounces tie firsts designated service password associated with the "Training" mode; a requesting vocal message is generated and transmitted to the user; the user pronounces the second designated service password representing the chosen training mode; the user pronounces the vocal password which is analyzed in the text-dependent and text-independent modes and stored as the second password template of this user; a vocal message is generated and transmitted to the user requesting continuation of the training procedure; then the user pronounces a vocal service password and a control command which are analyzed and recognized in the text-dependent mode and sequentially loaded into the logical function memory as the user's second service password and control command templates; a vocal confirmation signal is generated and transmitted to the user and the system is switched to the operating condition.

One more embodiment of the claimed method is associated with alteration of the degree of security, wherein said method includes the following steps: the verified user pronounces a fifth designated service password associated with the "Degree of security" mode; recognition of the "Degree of security" service password based on the text-dependent voice analysis of the pronounced service password with the aid of the service password template stored in the logical function memory; generation of a control signal for the adaptive control unit to select the "Degree of security" mode; alteration of the degree of security according to such mode; generation and transmission of a vocal message to the verified user requesting commencement of the training procedure; analysis of the vocal password in the text-dependent and text-independent modes; storage of the analyzed password as the password template in the "Degree of security" mode and switching the system to the operating condition.

Thus, the aforesaid disadvantages and other limitations of the known methods can be obviated by means of the claimed invention.

### BRIEF DESCRIPTION OF THE ACCOMPANYING DRAWINGS

FIG. 1 is a block-diagram of the system for object protection against unauthorized access according to the present invention;
FIG. 2 is a diagram representing the symbols used in the succeeding state diagrams;
FIG. 3 is a state diagram illustrating the system operation in the training mode to recognize the main user's voice;
FIG. 4 is a state diagram illustrating the system operation in the user verification and object subsystem control mode;
FIG. 5 is a state diagram illustrating the system operation in the training mode to recognize an additional user and in the system retraining mode;
FIG. 6 is a state diagram illustrating the system operation when it is used for a motor vehicle in the "Valet" parking mode.
FIG. 7 is a state diagram illustrating the system operation when it is used for a motor vehicle in the "Car-jacking" mode.
FIG. 8 is a state diagram illustrating the system operation in the training mode to recognize the main user in case of a change in his/her voice.
FIG. 9 is a state diagram illustrating the system operation in the degree-of-security alteration mode.

### DETAILED DESCRIPTION OF THE PREFERRED EMBODIMENTS OF THE PRESENT INVENTION

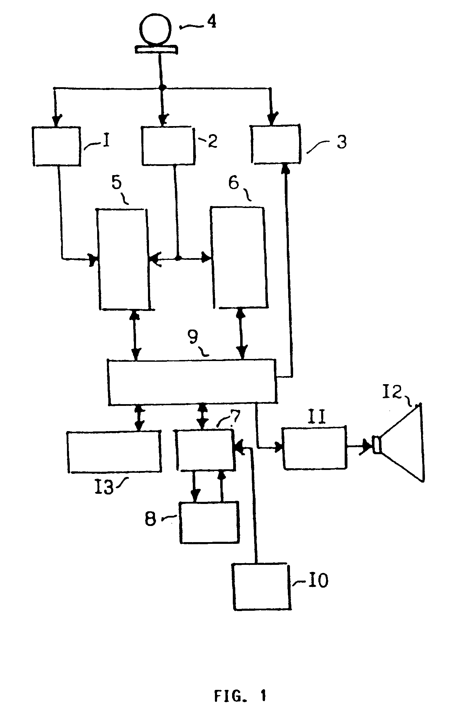

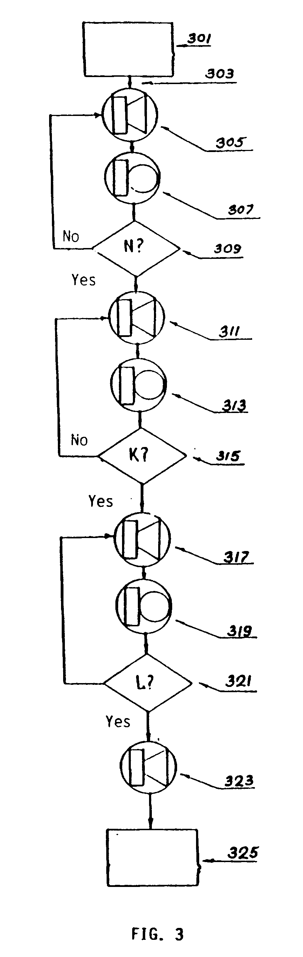

Referring to FIG. 1, a system for controlling vehicles to provide protection against an unauthorized access comprises a text-independent parameter discrimination unit 1 for user verification, a text-dependent parameter discrimination unit 2 for user verification and control purposes, and an unauthorized user's voice recorder unit 3, all units having their inputs connected to a microphone 4.

From all possible combinations of spectral and time parameters of speech, the unit 1 discriminates only those whose combination characterizes the user's voice and manner of speech in a unique manner and which are independent of the text pronounced by the user. Such parameters may generally include:
- an averaged basic vocal tone, its deviation range, basic tone frequency distribution pattern and other characteristics of the tone;
- an averaged voice frequency spectrum of the given announcer within the entire analysis range or bands;
- an individual speech rhythm determined as an alternation of tone and non-tone parts of speech;
- individual high-frequency formant values. Also, other parameters may be used for the purpose, provided they convey information about individuality of a speaker.

From the aforesaid combination of the speech parameters, the unit 2 chooses a set sufficient for reliable recognition of a statement (a word or a sentence). Such parameters, for example, may include a dynamic spectrum or other dynamic parameters such as variation of the linear prediction coefficient with time, wherein the element being recognized represents a vocal command (a word or a group of words) as an aggregate. In addition to the parameters individual to the vocal password or vocal command as an aggregate, use may also be made of parameters which represent an individual characteristic for separate speech elements such as phonemes or syllables, for example, formant frequencies.

The unit 3 serves to record conversations at the object (motor vehicle saloon) when the system detects an unauthorized access thereto.

The outputs of the units 1 and 2 are connected to a user's identity verification subsystem 5 which uses the following three levels to verify the speaker.

Firstly, a family of password was checked. This recognition mode is close to the "speaker-independent" mode. Use may be made of any speech (words, commands) recognition procedures accepted in the speech recognition theory, such as a dynamic time convolution, masked markov models or phonemewise recognition (cf., for example, P. Foster et al., Speech Recognition, A Telecom Library Inc. Book, 1993).

Secondly, use were made of the aforesaid procedures but in the "Speaker-dependent" mode. The recognition threshold, in this case, are low and cutoffs represent the users knowing passwords but having different voices or pronunciation manners.

Thirdly, the speaker individuality is determined based on his speech and taking into account a combination of the text-dependent and text-independent parameters (cf. description of the units 1 and 2). There is a large number of such parameters and a decision is taken on a selection basis taking into account the parameters comprehension.

The output of the unit 2 is also connected to a service password and control command (vocal message) recognition subsystem 6. The subsystem 6 depends for its operation on the same principles as the subsystem 5. It uses procedures close to the speaker-independent procedures for control command recognition and to the speaker-dependent procedures for service password recognition.

The subsystem 5 uses text-dependent and text-independent parameters and generates in the course of training an authorized user's voice template, determines during verification whether a speaker is the authorized user and generates an appropriate signal for an adaptive control unit 7. The subsystem 6 generates in the course of training the aforesaid vocal messages (wherein the service password templates are generated for recognition in the "Speaker-dependent" mode and the control command templates, for recognition in the "Speaker independent" mode), and during verification it generates control signals in accordance with each stored and recognized message (service password or control command) and transmits the control signals to the adaptive control unit 7.

The unit 7 is also connected to a logical function unit 8, an interface unit 9 and an ignition key 10 which serves to initialize the system and is essentially a sole manual-operated mechanical means controlling the system. The adaptive control unit 7, on the one side, and the unit 3, the subsystems 1 and 2, a vocal message generator 11 forming such messages transmitted through a loudspeaker 12 to inform and prompt the user, and subsystems 13 of the object, on the other side, interact preferably through the interface unit 9. For such object as a motor vehicle the subsystems 13 include the door locks, glass-frame risers, windshields, heating and air conditioning system, cabin lighting system, headlamps, ignition, telephone, navigation system, etc.

Responsive to the control signals, produced by the subsystems 5 and 6, and logical functions, stored in the unit 8, the control unit 7 controls selection of the parameters used by these subsystems. Besides, it governs the generation of standards (and methods of such generation) and the parameters of recognition algorithms of the subsystems 5 and 6. Also, the unit 7 controls the operating conditions of the entire system and interaction thereof with the motor vehicle subsystems. The unit 8 stores programs of the system operating modes and said interaction and sends the stored data to the control unit 7 in compliance with the recognized service password.

The system adjusted for motor vehicle protection against an unauthorized access operates as follows.

The user's vocal signal comes through the microphone 4 to the units 1 and 2, with unit 1 extracting individual parameters of the user's speech depending on the linguistic structure (contents) of the statement, while the unit 2 extracts the parameters associated with said structure. The subsystem 6 generates attribute spaces and standards required to recognize service passwords in the "Speaker-dependent" mode and the control commands in the "Speaker-independent" mode. The service passwords are used to adjust the system modes and should not be disclosed to an unauthorized user.

The control signals generated by the subsystems 5 or 6 are fed to the adaptive control unit 7 which based on the incoming signals reads from the unit 8 the appropriate system mode selection programs (for password verification or recognition purposes) or generates the control signals directly for drives (actuating means) (not shown) of the motor vehicle systems (for control command recognition purposes). The control signals and the system mode selection programs are transmitted through the interface unit 9 to the vehicle actuating means and to the system units and subsystems.

These events may bring the actuating means of the vehicle systems into operation, adjust the parameters and algorithms of the voice subsystems, organize various types of dialogue between the user and the system, write vocal messages of unauthorized users into ROM, turn on various interlock modes of the motor vehicle vital systems, turn on/off various alarm systems.

The units 1 and 2 can be built around special analog or digital devices, for example, digital signal processors such as TMS 320 or /pD 7720. The subsystems 5 and 6 and the adaptive control unit 7 can be built around general-purpose microprocessors such, for example, as Intel 188, 286, 386, etc. These procedures can be accomplished with the aid of vehicle-borne computers. The generator 11 may be essentially any speech synthesizer system, but writing the required amount of vocal messages directly into the memory is preferable. Similarly, memory or RAM may serve as a basis for the speech recorder unit 3 and the logical function memory 8 which essentially may be a programmable memory unit (for example, electrically programmable ROM).

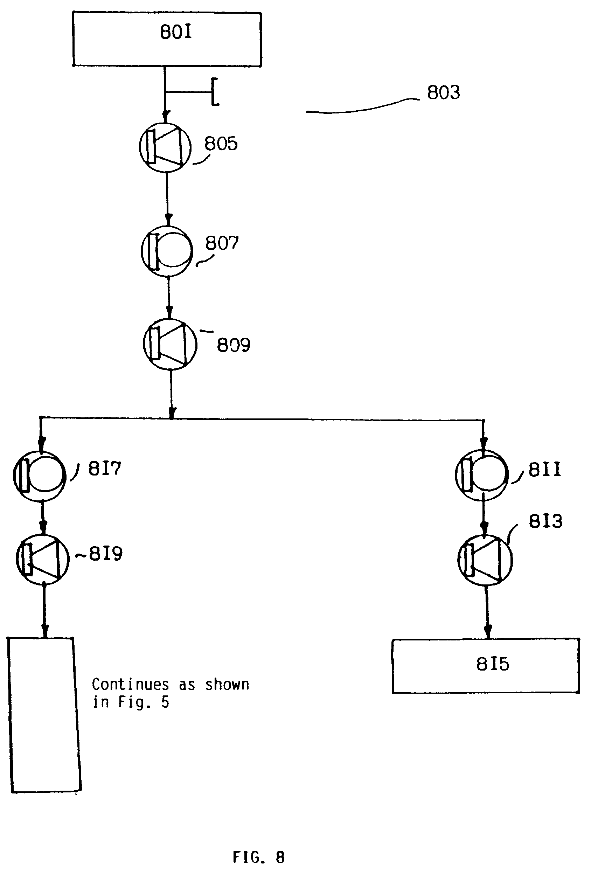

Now we consider more closely possible system operating modes which are initialized by service passwords and progress according to the logical functions (operating programs) stored in the unit 8. The illustrative examples of such modes are shown in FIGS 3 through 9.

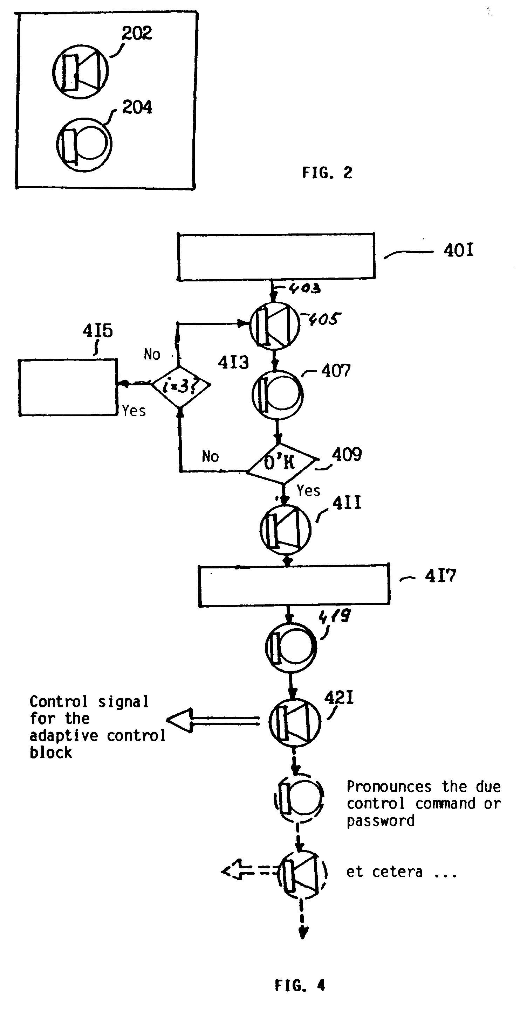

FIG. 2 illustrates the symbols used in the state diagrams. A circle 202 with a loudspeaker symbol denotes vocal messages generated by the system and a circle 204 with a microphone symbol denotes the user's vocal messages directed to the system.

FIG. 3 illustrates how the system is trained to recognize the main user's (owner's) voice. It is supposed that initially the system is untrained and is placed in an original operating state 301. In this case, the system initialization, i.e., a step 303, is accomplished by turning the ignition key 10 to the stable position immediately preceding starter turn-on. The system is ready for training to recognize a password, service passwords and control commands.

Dividing the user's statements into passwords, service passwords and control commands imposes definite requirements thereon (in terms of their recognition) and on their functional division.

The most stringent requirement is imposed on the recognition of a password used for identification "friend or foe." Hence, such identification is carried out in the stringent "Speaker-dependent" mode. The required password is repeated N times to be generalized within the user's voice "range" and to obtain the conclusion "Keep with friend and avoid foe" with a highest possible reliability. The password template generation mode of the system sets a first type of generating patterns and algorithmic parameters.

The requirements for a service password are less stringent. Such password sets (or resets) the system to the desired mode of operation, for example, training, retraining, "Valet," "Voice," etc., which modes are discussed below. Service passwords are introduced and verified in the less stringent "Speaker-dependent" mode which requires no repetition of the passwords during training and sets a second type of generating patterns and algorithmic parameters.

Training the system in recognition of the control commands is still less critical, a third type of generating patterns and algorithmic parameters. The commands ("Doors," "Windows," "Headlamps," etc.), which control the motor vehicle subsystems, are introduced and verified in the "Speaker-independent" mode and require no repetition.

As soon as the system is ready for training in recognition of a password, service passwords and control commands, it declares at a step 305 with the aid of the generator 11 and the loudspeaker 12: "System is not trained. Training. Pronounce your password for verification." The user pronounces a password (step 307) and, to enhance reliability, makes it N times where N is preferably three. The system stores the password at a step 309. Storage may be accomplished by way of group averaging or generalization, which utilizes the envelope of all N samples, etc. The branch "No" 309-305 takes place when the number of password repetitions is less than N.

Then the system goes to the next step of storing K service passwords and requests the user (at a step 311): "Pronounce service password i" (l, i, K). At a step 311 the user pronounces the appropriate service password, the system stores this password at a step 315 and requests the next one of the K service passwords which are to be pronounced (for example, "Valet," "Voice," etc.). The service passwords may include a backup verification password accomplished in the "Speaker-independent" mode. The backup password is the second entry into the system.

The last stage of training is learning of L control commands, which stage like the service passwords training procedure, have steps 317 ("Pronunciation of control command j," l, j, L), 319 (entry of the command) and 321 (storage of the command).

Finally, the system announces at a step 323: "Training is completed. Bon voyage" and sets to the operating state (325). In this state the system generates a signal to unlock the motor vehicle subsystems, is capable of receiving and carrying out all control commands and assessing service passwords. As follows below, when passwords are being pronounced, the system may also readjust itself in compliance with the logical functions stored in the unit 8. The systems remains in the operating state 325 until the key 10 is turned off. When this happens, the system changes to the "Off" mode 401 (FIG. 4) which is characterized by generation of the signal interlocking the motor vehicle subsystems.

FIG. 4 illustrates the user verification procedure when he/she is getting into the vehicle. It is supposed that the user opens the vehicle with the aid of standard (basic) means. For example, using a key or a remote panel acting on the standard (basic) security system which opens the door locks and removes automobile interlocks provided by this type of the security system. Then, the user inserts the "ignition" key 10 and turn it to the last stable position immediately preceding the "Starter" position. Turning the key to the "Starter" position in this case will fail to start the vehicle because the system's means used for interlocking the automobile circuits can be deactivated only after the authorized user has been correctly verified.

When the "Ignition" key is in the last stable position, the system is initialized (step 403). This done, the system at a step 405 asks: "Call your password." The user during a preset time interval, say, five seconds, pronounces the password (step 407). The system verifies the user (step 409) based on both a linguistic structure of the password (contents) and individual features of the voice. If verification is positive, the system changes to the operating state confirmed by the phrase "Bon voyage" (step 411) and removes the interlocks from the vehicle subsystems. If the verification result is negative, the system at a step 413 allows the user to take two more attempts. If the result is still negative, the system turns on (step 415) the alarm means indicating an attempt of unauthorized access (siren, blinking headlamps, radio signal, etc.) and may additionally activate the other security means such, for example, as door interlock, etc. The same result will be caused if the password is not pronounced three times within the preset time interval selected by the user.

When placed in an operating state 417, which is essentially the same as the operating state 325, the system is ready to respond to the user who pronounces at a step 419 the instruction in the form of a control command or a service password. The system responds to the pronounced instruction and generates a control signal sent to the adaptive control unit 7 (step 421), whereupon a sequence of the steps 419 - 421 may be repeated for another service password or control command (see FIG. 4 without reference numbers).

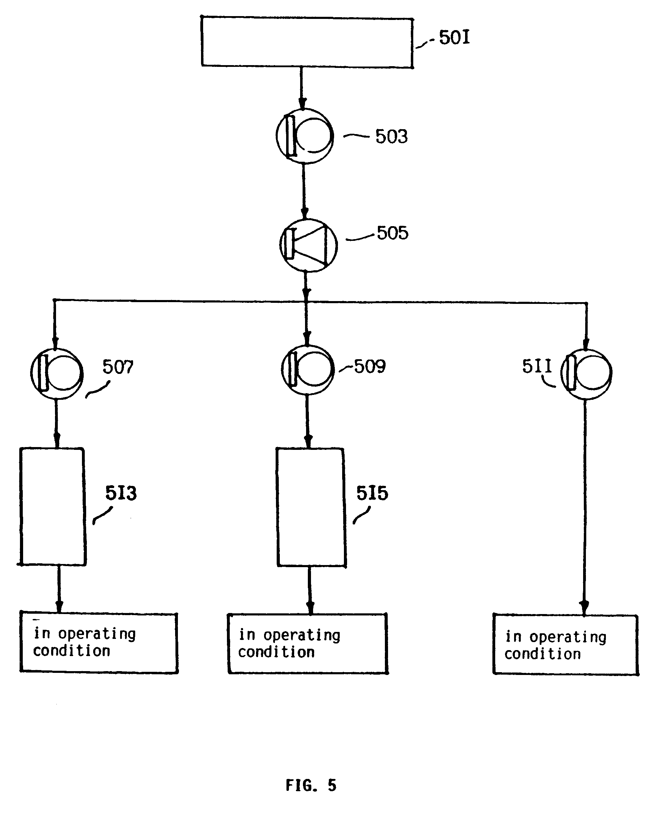

FIG. 5 is a diagram of additional user(s) training or retraining, with the system placed in a state 501 which is essentially similar to the state 417 of FIG. 4. The training procedure may be initiated only by the main user. After a service password, associated with the training procedure which is stored in the logical function memory 8, has been pronounced (step 503), the system asks at a step 505: "Which user?" Then the main user may choose one of three options.

The first option beginning with the user's question "Main?" (step 507) causes a branch to the aforesaid procedure of FIG. 3 from the step 305 and down to the operating state. The system, in this case, is retrained to the main user's voice responsive to a new password instead of the preceding one which may be designated for an additional user, or a new password may be used together with the old one for the main user's purposes.

The second option begins at a step 509 when the system is asked: "First additional?" or "Second additional," etc. Then, the aforesaid procedure of FIG. 3 is accomplished to train the system to recognize the additional user's voice, except for introduction of a password requesting the training procedure. This option is completed when the system changes to the original state.

The third option is a cancellation procedure. Responsive to the appropriate command, the system at a step 511 returns to the operating state.

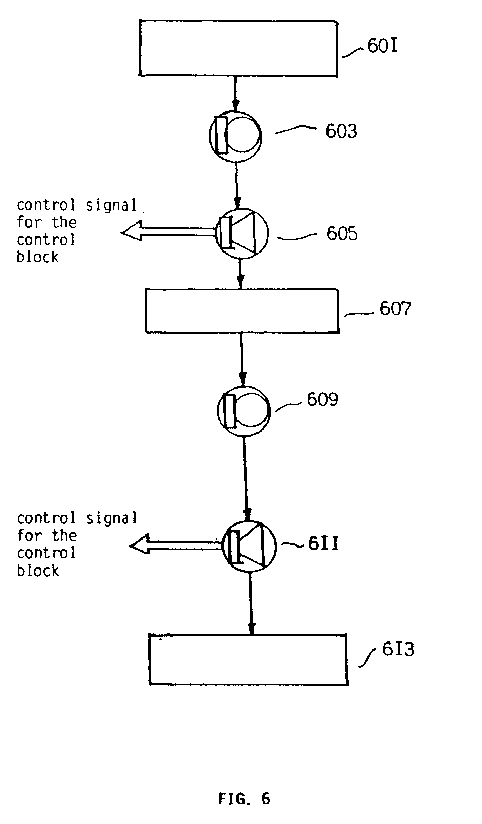

FIG. 6 illustrates the "Valet" mode. This mode is usually used in situations when the user has to transfer, for the time being, the control over his motor vehicle to other persons (unauthorized users), for example, when his car is parked at a hotel, on a parking lot, at a service center, etc. In these cases it is expedient to turn off the system so as to be able to rapidly turn it on again. Initially, the system is in the operating state (step 601 corresponding to the step 417). After the user has pronounced the password (step 603) corresponding to the "Valet" procedure, the system adequately responds at a step 605 and a control signal is sent to the control unit 7. The unit activates the "Valet" mode by calling the appropriate logical function from the memory 8. The function (program) causes the system to branch to a waiting step 607 which is characterized in that as long as this mode is on, all system interlocks, irrespective of the position of the "Ignition" key, are released and the system can respond only to the service password canceling the "Valet" mode (step 609) while ignoring all other commands and passwords of the user. In this case, the system activated by the "Ignition" key fails to switch from the "Valet" mode to any other mode ("Verification," etc.) until the user pronounces the service password cancelling the "Valet" mode, whereupon the system switches to the operating state and sends the appropriate signal to the control unit 7 at a step 611 when the system is placed in an operating state 613 (equivalent to 601).

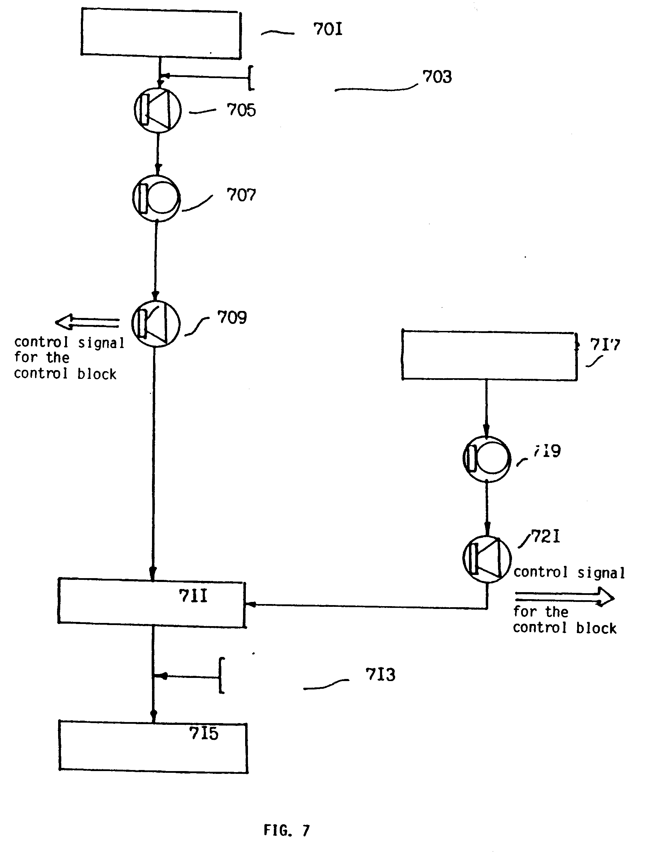

FIG. 7 represents a state diagram illustrating the "Car-jacking" mode." This mode is used to counteract violent capture of a vehicle. Car-jacking may take place under various circumstances.

The first situation. The vehicle engine is shut down (reference number 701 similar to 401). Criminals may threaten the user into turning on the security system (using the ignition key 10 at a step 703 similar to 403), switch it to the operating state with the aid of a verification password and/or then to the "Valet" mode. In this case, responsive to the system request "Call your password" (at a step 707), the user pronounces a service password corresponding to the "Car-jacking" mode. As result, the operating state is fully simulated. But, while saying "Bon voyage" at a step 709, the system at same time generates a control command and sends it to the control unit 7. Responsive to this command, the unit 7 activates the "Car-jacking" logical function called from the memory 8. As a result, alarm signals (radio signal, blinking headlamps, siren, etc.) (step 711) and then the interlocking means will be successively turned on after a lapse of certain delays. The first delay interval allows the user to move away to a safe distance from the scene of action. The warning signals may turn on the appropriate vehicle alarm systems. These systems are beyond the scope of this invention, though the claimed system produces such signals.

The "Car-jacking" state is removed by turning off the "Ignition" key (step 713) and the system changes to the "Off" state (step 715 similar to the step 401), when it is prepared to the verification cycle. The alarm system signals can be turned off, for example, by disconnecting power from the system or by other actions applicable for the vehicle "Security" system. Nevertheless, even after the alarm signals are off, the automobile can be activated only in response to the main user's voice.

The second situation. The vehicle engine runs. The system is in the operating state (step 717). The user is threatened into leaving the vehicle. If, in this case, he or she managed (719 is similar to 707) to pronounce a service password corresponding to activation of the "Car-jacking" mode, the system does not respond and changes to the step 711, whereupon the first situation repeats. If the user turns off the "Ignition" key, the entire situation described above repeats.

FIG. 7 is a state diagram corresponding to the "Voice" mode which may be activated by the user if his/her voice has substantially changed due to decease or changes in the psycophysiological condition. The system is off (step 801 similar to the step 401). After the system is turned on (at a step 803 which is similar to the step 403), it requests: "Call your password" (step 805 similar to the step 405) and the user pronounces (at a step 807) an alternate service password, the standards of which are generated in the "Speaker-independent" mode. The templates of "easily pronounceable password" may be formed both in the "Speaker-independent" and "Speaker-dependent" modes. This adds to protection against possible simulation of a password if it anyhow has become known to a criminal. In case of doubtful identification of the user the password is requested to be repeated. If the password is pronounced under threat, the system may additionally include an emotional stress recognition system (not shown). Methods for recognition of emotional conditions are well known (cf., for example, USSR Inventor's Certificate No. 793575, V.I. Galunov et. al, A Device for Determination of a Change in Emotional State with the Use of a Vocal Signal"). In this case the system will again change to the state 805 ("Call your password") instead of the state (mode selection) and if an attempt is made to pronounce the password once again (which is not the situation corresponding the "Voice" mode parameters), the "Car-jacking" mode is activated.

In the absence of the aforesaid problems the system easily recognizes the password and requests the mode at a step 809. There are two outcomes in this case.

If during a preset time interval (such as five seconds) no commands are pronounced (no user's response), the system changes to the "Valet" mode (step 813 similar to the step 605), to a waiting step 815 (similar to the step 607) and further.

If a password corresponding to the training mode is pronounced (at a step 817), the system responds at a step 819 by asking: "Which user?" (similar to the step 505), whereupon the training (more exactly, retraining) procedure may be carried out to adapt the system to a new user's (changed) voice state. This mode is more similar to the procedure illustrated in FIG. 5.

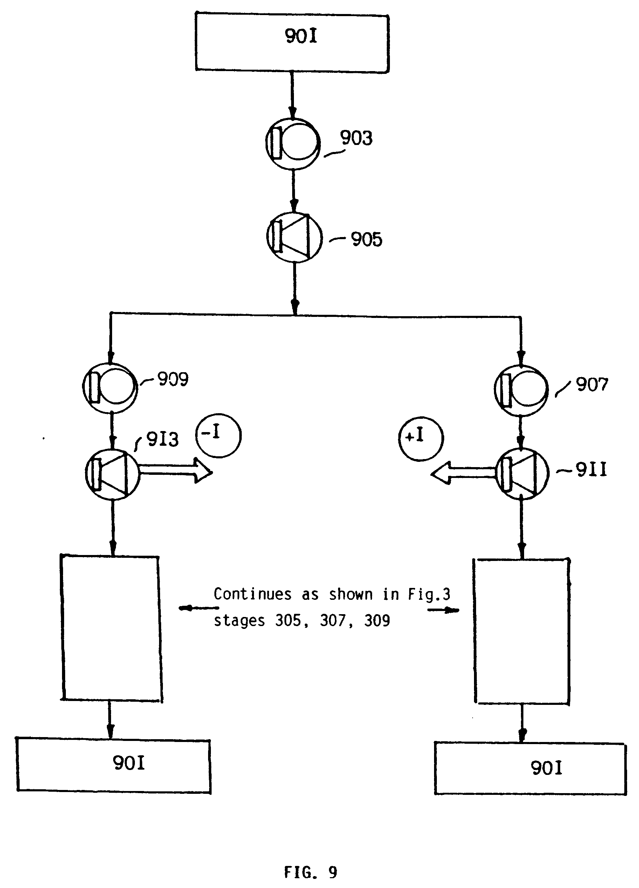

Finally, FIG. 9 illustrates one more operating mode of the system associated with a change in a security level thereof. The idea forming a basis of the security level consists in the degree of "rectification" of an envelope running above the user's vocal messages (password, or service password, or control command). The more intimacy between the envelope and the vocal messages, the lower probability of simulation of the authorized user's message, which is of an utmost importance for a password. Initial adjustment of the system is oriented to a mean statistical user. At the same time, the situation sometimes requires another degree of security defined by different speech capabilities of users and different levels of requirements imposed by them on the vehicle security provided by this system. This mode changes the decision-making threshold by altering, for example, one of the verification algorithm constants.

When the system is in the operating state (step 901 similar to the step 417) the mode commences when a service password of the respective change in the degree of security is pronounced (at a step 903). The system asks: "Security degree. Increase or decrease?" After the appropriate command has been pronounced (step 907 for "Increase" or step 909 for "Decrease") by the user, the system changes the security degree by one step toward the increase or decrease by transmitting a control signal to the adaptive control unit 7 at a step 911 or 913, respectively. The subsequent procedure of system adaptation to the given user with a new security degree is similar to that illustrated in FIG. 3 (steps 305, 307, 309). After adaptation the system returns to the operating state.

The number of modes defined by the logical functions may optionally be increased or decreased. The other embodiments, including recording and reproducing an unauthorized user's voice in case of an attempt of unauthorized access or during the "Car-jacking" mode (conversation in a saloon), may be illustrated in the same manner.

Those skilled in the art may easily perform various modifications of and additions to the preferred illustrative embodiments within the scope defined by the claims following below.

## Claims

1. A method for controlling vehicles to provide protection against an unauthorized access based on automatic voice analysis, comprising initialization of a multifunctional security system suitably installed in the motor vehicle, introduction of vocal passwords through a system microphone by the user, analysis of the vocal passwords by a user's voice identity verification unit and a vocal message recognition unit controlled by a system control unit, storage of the analyzed vocal passwords in the form of password templates, comparison of the received password templates with the stored templates and activation of actuating means, an alarm and interlock unit of the security system depending on the voice analysis results under control of said control unit, and user training, *characterized in that* a logical function memory of said system stores logical function data which are output in response to an adaptive control procedure from said control unit during readjustment of operating modes and parameters of said verification and vocal message recognition subsystems according to the stored logical function programs, a vocal message is generated in said security system requesting commencement of a training procedure, and such message is transmitted to the user, when the password received from the user is analyzed, the system utilizes voice analyses procedures in both text-dependent and text-independent parameter modes of the user's voice identity verification unit and the vocal message recognition unit of the system controlled by said control unit, then a vocal message is formed requesting continuation of the training procedure, and said message is transmitted to the user, vocal service passwords are introduced through a system microphone by the user, which passwords are analyzed in the text-dependent parameter mode by said vocal message recognition unit controlled by said control unit, the analyzed vocal service passwords are stored as the templates of such passwords in said logical function memory, a vocal message is formed requesting continuation of the training procedure and said message is transmitted to the user, vocal control commands are introduced through the system microphone by the user, which commands are analyzed in the text-dependent parameter mode by said vocal message recognition unit controlled by said control unit, the analyzed vocal control commands are stored as the templates of such commands in said logical function memory, whereupon a vocal confirmation message is formed to inform and prompt the user and said message is transmitted to the user, whereupon the system is changed to the operating state.

2. A method for controlling vehicles to provide protection against an unauthorized access based on automatic voice analysis as claimed in claim 1, *characterized in that* vocal passwords are introduced into the system sequentially a preset number of times.

3. A method for controlling vehicles to provide protection against an unauthorized access based on automatic voice analysis as claimed in claim 1, *characterized in that* a plurality of vocal service passwords are sequentially introduced into the system, each of which is individually analyzed and stored in the system thereby providing for a plurality of service password templates.

4. A method for controlling vehicles to provide protection against an unauthorized access based on automatic voice analysis as claimed in claim 1, *characterized in that* a preset number of vocal control commands is introduced into the system, wherein said commands are introduced in sequence and each of them is individually analyzed and stored in said system.

5. A method for controlling vehicles to provide protection against an unauthorized access based on automatic voice analysis as claimed in claim 1, *characterized in that* before the user pronounces a password into the microphone, the system forms a vocal message requesting the vocal password to be pronounced and said message is transmitted to the user, then a control signal is generated for said control unit during initialization of the verification procedure, whereupon, if the verification is positive, the system is changed to the operating state and a vocal confirmation signal is transmitted to the verified user.

6. A method for controlling vehicles to provide protection against an unauthorized access based on automatic voice analysis as claimed in claim 5, *characterized in that* the vocal password is pronounced a preset number of times.

7. A method for controlling vehicles to provide protection against an unauthorized access based on automatic voice analysis as claimed in claim 1, *characterized in that* a vocal message is formed requesting the vocal password to be pronounced and said message is transmitted to the user, whereupon the user pronounces the password through the system microphone, then a control signal is generated for said control unit during initialization of the verification procedure, the user identity is verified under control of said control unit based on the vocal analysis both in the text-dependent and text-independent parameter modes with the use of the user's voice template stored in said logical function memory, and if such verification is positive, the system is changed into the operating state, a vocal confirmation data are generated and transmitted to the verified user.

8. A method for controlling vehicles to provide protection against an unauthorized access based on automatic voice analysis as claimed in claim 7, *characterized in that* the password is pronounced a preset number of times.

9. A method for controlling vehicles to provide protection against an unauthorized access based on automatic voice analysis as claimed in claim 7, *characterized in that* the user pronounces a service password through the system microphone, then a control signal is generated for said control unit during initialization of the recognition procedure, the pronounced service password is recognized by the vocal message recognition unit based on the voice analysis in the text-dependent parameter mode with the use of the service password template stored in said logical function memory, a control signal is generated to select the system operating mode corresponding to the recognized service password and a vocal message is generated for the user in the form of the recognized service password.

10. A method for controlling vehicles to provide protection against an unauthorized access based on automatic voice analysis as claimed in claim 7, *characterized in that* the user pronounces a control command through the system microphone, then a control signal is generated for said control unit during initialization of the recognition procedure, the pronounced control command is recognized by the vocal message recognition unit under control of said control unit and based on the voice analysis in the text-dependent parameter mode with the use of the control command template stored in said logical function memory, a control signal is generated to control one of actuating means corresponding to the recognized control command and a vocal message is generated for the user in the form of the recognized control command.

11. A method for controlling vehicles to provide protection against an unauthorized access based on automatic voice analysis as claimed in claim 7, *characterized in that* a service password corresponding to the "Car-jacking" mode is introduced, said service password is recognized by said vocal message recognition unit under control of said control unit and based on the parameter analysis in the text-dependent parameter mode using the "Car-jacking" service password template stored in said logical function memory, a control signal is generated for said control unit when the "Car-jacking" mode is selected, and actuating means and said alarm and interlock unit are activated.

12. A method for controlling vehicles to provide protection against an unauthorized access based on automatic voice analysis as claimed in claim 11, *characterized in that* said actuating means and said alarm and interlock unit are activated during a preset time interval from the instant the "Car-jack" service password is introduced.

13. A method for controlling vehicles to provide protection against an unauthorized access based on automatic voice analysis as claimed in claim 7, *characterized in that* the verified user pronounces a first designated service password associated with the "Training" mode, a requesting vocal message is formed in the system and transmitted to the user, then the verified used pronounces a second designated service password representing a selected training mode, then the second user pronounces through the system microphone a vocal password which is analyzed both in the text-dependent and text-independent parameter modes by said user's voice identity verification unit and said vocal message recognition unit under control of said control unit, the analyzed vocal password of the second user is stored in said logical function memory as the template of such password, a vocal message requesting continuation of the training procedure is formed and transmitted to the second user who then pronounces through the microphone a vocal service password analyzed both in the text-dependent and text-independent parameter modes by said user's voice identity verification unit and said vocal message recognition unit under control of said control unit, the analyzed service password is stored in said logical function memory as the second user's service password template, then a vocal message requesting continuation of the training procedure is formed and transmitted to the second user who pronounces a vocal control command through the system microphone, said control command is analyzed in the text-dependent parameter mode by said vocal message recognition unit under control of said control unit, the analyzed control command is stored in said logical function memory as the second user's control command template, a vocal confirmation signal is generated and transmitted to the second user, and then the system is changed to the operating state.

14. A method for controlling vehicles to provide protection against an unauthorized access based on automatic voice analysis as claimed in claim 5, *characterized in that* the verified user pronounces a third designated service password associated with the "Valet" mode, which password is recognized by said vocal message recognition unit under control of said control unit and based on the voice analysis in the text-dependent parameter mode using the "Valet" service password template stored in said logical function memory, a control signal is generated for said control unit when the "Valet" mode is selected, the security system is changed to the waiting state, with the alarm and interlock unit being disconnected, then the verified user pronounces a fourth designated service password associated with cancellation of the "Valet" mode which is recognized by the vocal command recognition unit under control of said control unit and based on the voice analysis in the text-dependent parameter mode using the "Valet" service password template stored in said logical function memory, a control signal is generated for said control unit when the "Valet" mode is canceled, and the system is changed to the operating state.

15. A method for controlling vehicles to provide protection against an unauthorized access based on automatic voice analysis as claimed in claim 1, *characterized in that* the system forms a vocal message requesting a vocal password to be pronounced and said message is transmitted to the user, the service password corresponding to the "Car-jacking" mode is pronounced, such service password is recognized by said vocal message recognition unit under control of said control unit and based on the voice analysis in the text-dependent parameter mode using the "Car-jacking" service password template stored in said logical function memory, a control signal is formed for said control unit when the "Car-jacking" mode is selected, and the actuating means and the alarm and interlock unit are activated in the system.

16. A method for controlling vehicles to provide protection against an unauthorized access based on automatic voice analysis as claimed in claim 15, *characterized in that* said actuating means and said alarm and interlock unit are activated during a preset time period from the instant of introduction of the "Car-jacking" service password.

17. A method for controlling vehicles to provide protection against all unauthorized access based on automatic voice analysis as claimed in claim 1, *characterized in that* the system forms a vocal message requesting a vocal password to be pronounced and said message is transmitted to the user, the service password corresponding to the "Voice change" mode is pronounced, such service password is recognized by said vocal message recognition unit under control of said control unit and based on the voice analysis in the text-dependent parameter mode using the "Voice change" service password template stored in said logical function memory, a control signal is formed for said control unit when the "Voice change" mode is selected, then the user pronounces a first designated service password associated with the "Training" mode, whereupon a requesting vocal message is formed and transmitted to the user who pronounces a second designated service password representing the selected "Training" mode, then the user pronounces a vocal password through the system microphone, which password is analyzed in the text-dependent parameter mode by said vocal message recognition unit under control of said control unit, the analyzed vocal password is stored in said logical function memory as the user's second password, the system forms a vocal message requesting continuation of the training procedure and said message is transmitted to the user, then the user pronounces through the system microphone a vocal service password which is analyzed in the text-dependent parameter mode by said vocal message recognition unit under control of said control unit, the analyzed service password is stored in said logical function memory as the user's second service password template, then a vocal message is formed requesting further continuation of the training procedure and such message is transmitted to the user who pronounces through the system microphone a vocal control command, said vocal control command is analyzed in the text-dependent parameter mode by said vocal message recognition unit under control of said control unit, the analyzed control command is stored in said logical function memory as the user's second control command template, a vocal confirmation signal is generated and transmitted to the user, whereupon the system is changed to the operating state.

18. A method for controlling vehicles to provide protection against an unauthorized access based on automatic voice analysis as claimed in claim 7, *characterized in that* the verified user pronounces a fifth designated service password associated with the "Security degree" mode, which password is recognized by said vocal message recognition unit under control of said control unit and based on the voice analysis in the text-dependent parameter mode using the "Security degree" service password template stored in said logical function memory, a control signal is generated for said control unit when the "Security degree" mode is selected, and according to said signal the security degree is changed, then a vocal message is formed requesting commencement of the training procedure, said message is transmitted to the verified user who pronounces through the system microphone a vocal password, whereupon said password is analyzed both in the text-dependent and in the text-independent parameter modes by said user's voice identity verification unit and said vocal message recognition unit under control of said control unit, the analyzed vocal password is stored in said logical function memory as the password template in the "Security degree" mode and the system is changed to the operating state.

19. A system for controlling vehicles to provide protection against all unauthorized access based on automatic voice analysis, said system being suitably installed in a vehicle, having actuating means and an alarm and interlock unit connected to an adaptive control unit and vehicle functional assemblies, and comprising a unit for generation of vocal messages for the user connected to said adaptive control unit, a user's voice identity verification unit and a vocal message recognition unit connected to a remote microphone sensing the user's voice and, through an interface unit, to said adaptive control unit, an initialization unit for selecting a mode for said adaptive control unit, *characterized in that* said system additionally includes a logical function memory interfaced with said adaptive control unit and storing programs controlling the parameters of the system modes and selection of text-dependent and text-independent parameters, wherein said user's voice identity verification unit performs verification based on both text-dependent and text-independent parameters analysis, forms of a first set of control signals, said vocal message recognition unit performs recognition based on the text-dependent parameters analysis of service passwords and control commands from said microphone followed by generation of a second set of control signals, and said adaptive control unit discriminates the control signals from the first set of such signals followed by generation of the appropriate commands for said alarm and interlock unit and control signals from the second set of such signals when one of the system operating modes is selected and parameters are changed based on the programs stored in said logical function memory, followed by generation of commands for said vocal message generation unit and actuating means.

20. A system for controlling vehicles to provide protection against an unauthorized access based on automatic voice analysis as claimed in claim 19, *characterized in that* said user's voice identity verification unit comprises a text-independent parameter discrimination unit to extract the vocal parameters specific to the user's voice, a text-dependent parameter discrimination unit for selection of the vocal parameters required to recognize a user's statement, and a first user's identity verification subsystem having its inputs connected to the outputs of said text-independent and text-dependent parameters discrimination units the inputs of which serve as the input of said user's voice identity verification unit.

21. A system for controlling vehicles to provide protection against an unauthorized access based on automatic voice analysis as claimed in claim 19, *characterized in that* said vocal message recognition unit comprises a text-dependent vocal parameter discrimination unit selecting the voice parameters required to recognize a user's statement and a second system for recognition of service passwords and control commands pronounced by the user, said subsystem having its input connected to the output of said text-dependent parameter discrimination unit the input of which serves as the input of said vocal message recognition unit.

22. A system for controlling vehicles to provide protection against an unauthorized access based on automatic voice analysis as claimed in claim 19, *characterized in that* said initialization unit is provided with an ignition key.

23. A system for controlling vehicles to provide protection against an unauthorized access based on automatic voice analysis as claimed in claim 19, *characterized in that* said vocal message generation unit is essentially a vocal message generator connected to a loudspeaker.

24. A system for controlling vehicles to provide protection against an unauthorized access based on automatic voice analysis as claimed in claim 19, *characterized in that* provision is made for a voice recorder unit which records conversations in the vehicle in case of an unauthorized access thereto, said unit being connected to the microphone and adaptive control unit.

25. A system for controlling vehicles to provide protection against an unauthorized access based on automatic voice analysis as claimed in claim 19, *characterized in that* said vehicle actuating means comprise any one or any combination in a group including actuating means of the door locks, glass-frame risers, windshields, heating and air conditioning system, cabin lighting system, saloon lighting system, headlamps, ignition, telephone, navigation system, etc.

26. A system for controlling vehicles to provide protection against an unauthorized access based on automatic voice analysis, said system being suitably installed in a vehicle, having actuating means, and comprising a system initialization unit, a unit for generation of vocal messages transmitted to the user, and a user's identity verification and vocal message recognition unit having its input connected to a remote microphone for introduction of user's messages into the system, all said units being connected to an adaptive control unit, *characterized in that* said system additionally includes a text-independent parameter discrimination unit to extract the vocal parameters specific to the user's voice, a text-dependent parameter discrimination unit to extract the vocal parameters required to recognize a user's statement, and a memory for storing logical function programs controlling the protection procedures when the operating modes and system parameters are adjusted, said memory being connected to said adaptive control unit, while said user's identity verification and vocal message recognition unit is essentially a first subsystem for user's identity verification, having its input connected to the outputs of said text-independent and text-dependent parameter discrimination units the inputs of which are connected to the remote microphone through which the user introduces his messages into the system according to the invention, and a second subsystem for recognition of service passwords and control commands pronounced by the user, said subsystem having its input connected to the output of said text-dependent parameter discrimination unit.

27. A system for controlling vehicles to provide protection against an unauthorized access based on automatic voice analysis as claimed in claim 26, *characterized in that* said initialization unit is provided with an ignition key.

28. A system for controlling vehicles to provide protection against an unauthorized access based on automatic voice analysis as claimed in claim 26, *characterized in that* said vocal message generation unit is essentially a vocal message generator connected to a loudspeaker.

29. A system for controlling vehicles to provide protection against an unauthorized access based on automatic voice analysis as claimed in claim 26, *characterized in that* provision is made for a voice recorder unit which records conversations in the vehicle in case of an unauthorized access thereto, said unit being connected to the microphone and adaptive control unit.

30. A system for controlling vehicles to provide protection against an unauthorized access based on automatic voice analysis as claimed in claim 26, *characterized in that* said vehicle actuating means comprise any one or any combination in a group including actuating means of the door locks, glass-frame risers, windshields, heating and air conditioning system, cabin lighting system, saloon lighting system, headlamps, ignition, telephone, navigation system, etc.

31. A system for controlling vehicles to provide protection against an unauthorized access based on automatic voice analysis as claimed in any of claims 19 and 26, *characterized in that* said adaptive control unit connected to said logical function program memory allows the user to control by his voice such system operating modes as change of security degree, training and retraining, introduction of a new user, turning off and oil, recording of unauthorized users' voices, access to the system for the authorized user in case of voice disorder, car-jacking protection.

32. A system for controlling vehicles to provide protection against an unauthorized access based on automatic voice analysis as claimed in any of claims 19 and 26, *characterized in that* provision is made for a subsystem performing verification based on other physiological parameters such as finger prints, signatures, face image, which system is outfitted with a set of special sensors responsive to the appropriate physiological parameters and is connected to said adaptive control unit.

33. A system for controlling vehicles to provide protection against an unauthorized access based on automatic voice analysis as claimed in any of claims 19 and 26, *characterized in that* the remote microphone is suitably mounted in a compact monoblock unit such, for example, as a suspender, glasses, watch, medallion, etc., with vocal messages transmitted via a communication channel using radio, heat or other type of radiation.
